# EUROPEAN PATENT SPECIFICATION

(11) **EP 3 193 049 B1**
(45) Date of publication and mention of the grant of the patent: **24.04.2019**
(21) Application number: 16151407.0
(22) Date of filing: 15.01.2016
(51) Int. Cl.: F16K 1/52, F24D 19/10

(54) **VALVE**
VENTIL
VANNE

(43) Date of publication of application: 19.07.2017
(73) Proprietor: Danfoss A/S, 6430 Nordborg (DK)
(72) Inventor: Clausen, Anders Østergaard, 8680 Ry (DK)
(74) Representative: Keil & Schaafhausen Patent- und Rechtsanwälte PartGmbB

(56) References cited:
- EP-A2- 1 193 431
- EP-A2- 1 193 432
- DE-A1-102004 041 213
- GB-A- 2 448 461

## Description

The invention relates to a valve comprising a valve housing, an insert, a valve seat, a valve element, a first fluid port and a second fluid port, wherein the insert can be rotated to reverse the flow direction from the first fluid port through the valve seat to the second fluid port, wherein the valve comprises a handle.

Valves of this kind are for example used to control the flow into or out of a radiator or heat exchanger. Changing the flow direction in this context means to change which side of the valve seat is connected to which of the two fluid ports or in other words which of the fluid ports is the inlet and which is the outlet.

From EP 1 193 432 A2 a valve of the above kind for the use with a radiator is known. Therein an insert comprising the valve seat is rotatably arranged in the valve housing. The flow direction through the valve can be reversed by rotating an adjustment element that is rotationally fixed to the insert.

Another valve having the possibility to change the flow direction through the valve seat is known from EP 1 193 432 A2 A2. The valve is provided with an insert which can be rotated within a valve housing. To this end the insert comprises an opening which can be brought into engagement with a tool.

DE 10 2004 041 213 A1 describes a valve comprising a valve seat element having two openings. The valve comprises a valve element at an end of a stem which is inclined with respect to an axis of the valve. By rotating an insert which supports the stem the valve element can cooperate with one of the two openings.

GB 2 448 461 A shows a radiator valve comprising an insert which is arranged in a valve housing. The insert interrupts a path between a first channel and a second channel and has an auxiliary valve seat, the side of which facing the valve element is connected to a first space which is connected to the first channel through the valve seat and the side of which facing away from the valve element is connected to a second space which is connected to the second channel.

Valves of this kind usually have the disadvantage that it is difficult to ensure that the insert is fully rotated into one of the desired rotational positions and not left in-between. In particular in previous valves of this kind it was possible to only partially reverse the flow direction and then attach the valve attachment to the valve. This either results in a leaky valve in which there is always a fluid connection between the first fluid port and the second fluid port even if the valve element engages the valve seat or the fluid port through the valve is partially blocked leading to a reduced maximum fluid flow through the valve.

It is therefore the task of the invention to provide a valve of the above kind that allows to ensure that the insert is only left in one of the intended rotational positions.

According to the present invention the above task is solved by a valve having the features of claim 1.

With this solution the reversal of the flow direction can be performed by pulling the handle from the second axial position into the first axial position. Then the handle and thereby the insert can be rotated from a first angular position to a second angular position in which the flow direction is fully reversed compared to the first angular position. The handle can only be displaced into a second axial position when the insert is in one of the intended rotational positions, e.g. fully reversed or vice versa and not in an intermediate position. A preferred embodiment of such a valve is a heat exchange valve, in particular a radiator valve.

In a preferred embodiment the housing comprises at least two cut-outs in a circumferential direction, which the handle engages in, when the handle in the second axial position. Thereby, it is ensured that the handle cannot be rotated when the handle is in the second axial position. This in turn also blocks a rotation of the insert.

In a further preferred embodiment the handle comprises at least one finger, that protrudes in a radial direction and that engages in the housing when the handle is in the second axial position. Preferably the handle comprises two fingers protruding in a radial direction. Preferably the two fingers are arranged on opposite sides of the handle, i.e. at 180° angular displacement. It is furthermore preferred if the at least one finger engages into one of the cut-outs when the handle is in the second axial position. In case two cut-outs and two fingers are used which are arranged with a 180° angular distance one can automatically ensure that there are exactly two rotational positions in which the handle can be placed into a second axial position.

It is furthermore preferred if the insert is connected to at least one recess, which the handle engages in, when the handle is in the first axial position such that rotating the handle also rotates the insert. Preferably, the recess or the recesses are arranged in a part that is rotationally fixed to the insert, whereby the handle can engage into the recess and thereby also rotate the insert. Preferably, the handle comprises two fingers and the valve comprises two recesses each of which are arranged at a 180° angular distance.

It is preferred if the valve comprises a valve top, wherein the valve top is rotationally fixed to the insert. In this embodiment the recess or the recesses are preferably arranged in the valve top. Preferably the handle is arranged around the valve top.

In a preferred embodiment the valve comprises a presetting element that can be rotated relative to the insert to adjust a maximum flow through the valve. For example, the presetting element may be connected to the valve element and allow to change the maximum distance of the valve element to the valve seat. The presetting element is preferably only connected to the valve top, and optionally also to the insert. However, the presetting element preferably is not rotationally fixed to the valve top, the insert and the housing. However, the presetting element can be connected at least to the valve top by a friction clutch. It is preferred, in case the handle is in the second axial position that the insert and the valve top are blocked from rotation and the presetting element can be rotated relative to the insert and the valve top allowing to change the presetting. The maximum fluid flow through the valve is pressure dependent. Consequently, adjusting the maximum fluid flow can be understood as adjusting the maximum effective flow cross section through the valve.

In a preferred embodiment the valve top is rotatably connected to the housing and holds the presetting element in the housing. This embodiment is preferable if the top and/or the presetting element and/or the insert are made from a plastic material and the housing is made from a metal. In this case it can be difficult to reliably connect the valve top to the housing by a screw connection because the plastic material in the valve top could soften under temperature changes and a secure connection between the valve top and the housing could not in all cases be ensured. Furthermore, a rotatable connection ensures that the valve top can be rotated with the handle and the insert when the flow direction is to be reversed. Preferably the valve top is rotatably connected to the housing by a snap-in connection. Alternatively, the valve top can be rotatably connected to the housing by a locking ring or other connection means which enable a relative rotation of the valve top to the housing.

It is furthermore preferred if the handle blocks the connection of a valve attachment to the valve when the handle is not in the second axial position. In this embodiment the handle ensures that no valve attachment can be connected to the valve or the valve top in particular when the handle is not in a second axial position. This ensures that there is no mistake made during installation and setup of the valve and the valve is not left in an intermediate (leaky) valve position but only in a position in which the flow direction is clearly defined. Preferably, bringing the handle into the first axial position means that the handle is pulled up towards the valve top and therefore blocks a connection geometry for the valve attachment.

In a further preferred embodiment the insert, the valve top and the presetting element are all rotated with the handle when the flow direction is reversed. This has the advantage that one may for example only connect the valve top to the housing by a snap connection and connect the presetting element as well as the insert only to the valve top. This simplifies the assembly of the valve.

In a further preferred embodiment the presetting of the presetting element is not changed when the handle is rotated with the insert. This can be for example facilitated by having the insert, the valve top and the presetting element all being rotated with the handle when the flow direction is reversed. This has the advantage that one may for example save a chosen presetting when the flow direction through the valve is to be reversed. In this case one first detaches a valve attachment, then uses the handle to reverse the flow through the valve and then reattaches the valve attachment.

It is furthermore preferred if the handle is a locking ring. A locking ring is a relatively simple way to arrange the handle for example around the valve top and/or the housing. In this case the finger or the fingers can be arranged at a radial inside of the locking ring protruding radially inwardly.

In a further preferred embodiment the axial movement of the handle is limited by the housing on one end and the by the valve top on the other end. This way it is ensured that the handle can only be moved between the first axial position and the second axial position. Preferably, the handle abuts the valve top in an axial direction in the first axial position and the handle abuts the housing in an axial direction in the second axial position.
Preferably, the handle can only be displaced into the second axial position in two discrete rotational positions that correspond to one of the flow directions each.

It is furthermore preferred, if the handle comprises at least one flow indicator to indicate the chosen flow direction through the valve. The flow indicator can for example be arranged on one or several of the fingers or it can be arranged on a radial outer surface of the handle so it can be easily observed. The flow indicator can for example be in the shape of an arrow that points in the direction of the fluid port that is currently the outlet or the inlet.

In a further preferred embodiment the flow indicator is arranged such that it is visible to an outside even if a valve attachment is connected to the valve. This has the advantage that one may observe if the valve has the correct flow direction even after the valve attachment has been connected to the valve and it is not necessary to remove the valve attachment to check the chosen flow direction of the valve. A valve attachment may be a valve actuator like a thermostat attachment.

Preferred embodiments of the invention will now be described with reference to the figures, wherein:
- Fig. 1: shows a cut view of a valve according to the invention with the handle in a second axial position,
- Fig. 2: shows another cut view of the same valve as fig. 1 with the handle in the first axial position,
- Fig. 3 and 5: show the same valve as fig. 1 and 2 with the handle in the second axial position,
- Fig. 4 and 6: show the same valve as fig. 1 to 3 and 5 with the handle in the first axial position,
- Fig. 7: shows the valve according to fig. 1 to 6 without the handle attached to the housing,
- Fig. 8: shows a handle of a valve according to the invention.

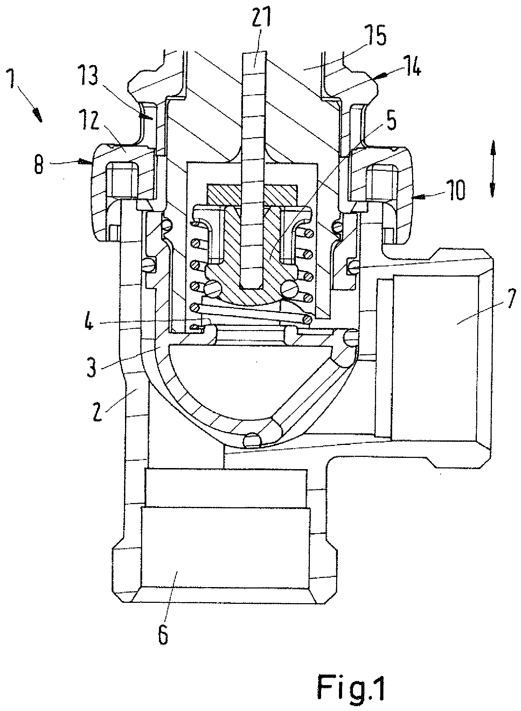

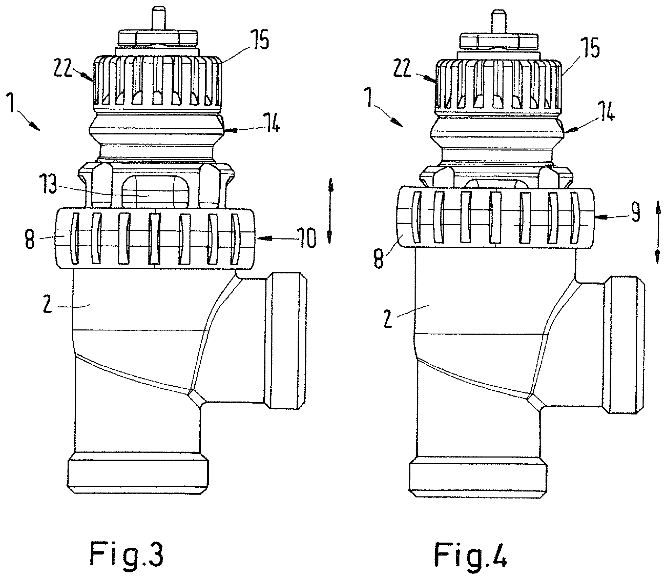

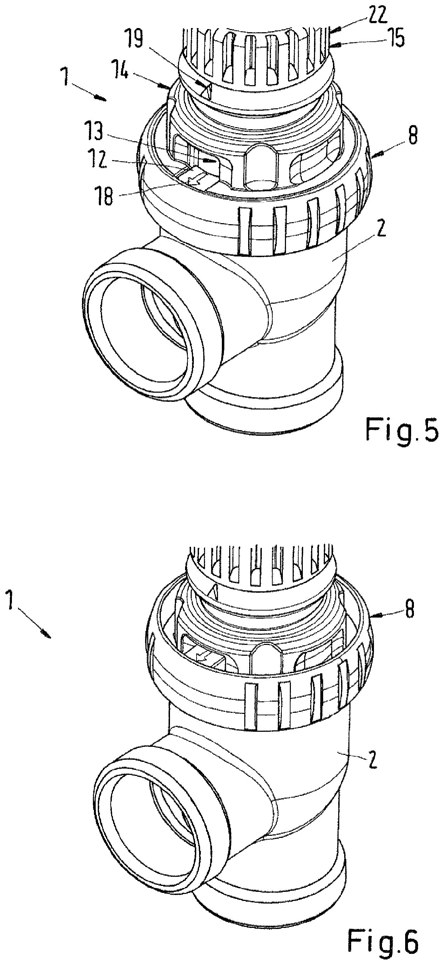

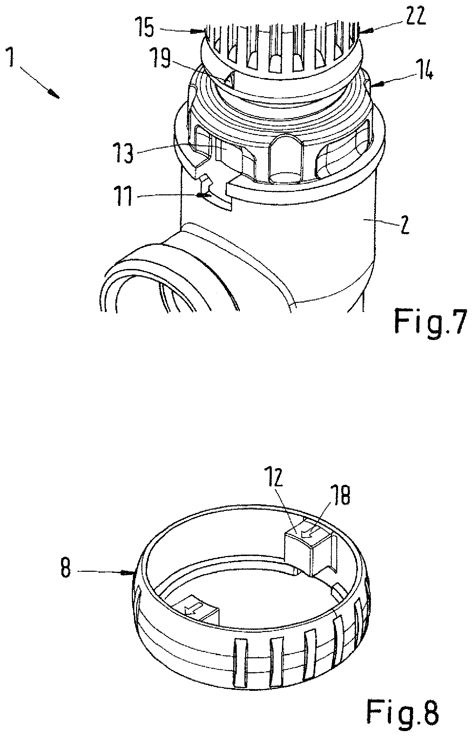

Fig. 1 to 8 show the same embodiment of a valve according to the invention or in case of fig. 7 and 8 parts of the valve.

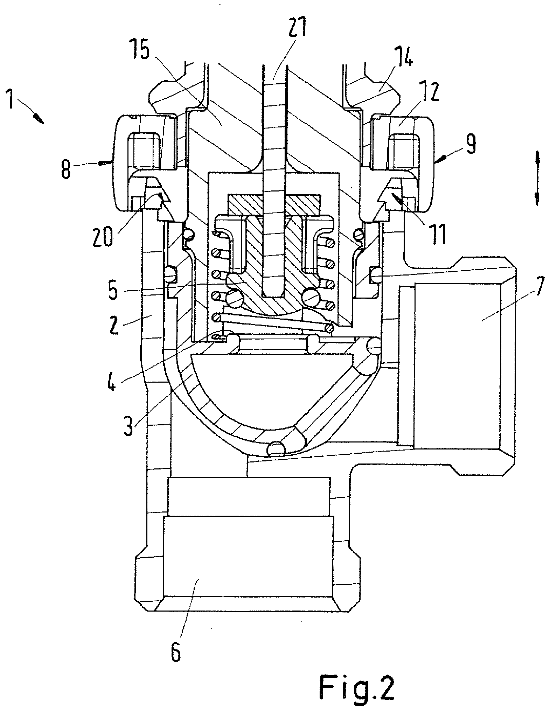

Fig. 1 and 2 show cut views of the valve 1 comprising a housing 2 as well as an insert 3. In the insert 3 a valve seat 4 is arranged which can be engaged by a valve element 5 to throttle or stop the fluid flow through the valve 1. In the housing 2 a first fluid port 6 as well as a second fluid port 7 are arranged. The insert 3 can in this embodiment be rotated by 180° around a closing axis of the valve to reverse the flow direction through the valve 1. "Axial" in the context of this application denotes the direction parallel to the closing direction of the valve element towards the valve seat. In the shown rotational position of the insert 3 the first fluid port 6 is the outlet and the second fluid port 7 is the inlet.

The insert 3 is rotationally coupled to a valve top 14 which is only partially shown in fig. 1 and 2. The valve top 14 can for example be connected to the insert 3 by a snap-in connection. As can be seen in fig. 2 the valve top 14 is connected to the housing 2 by a snap-in connection 20. The valve top 14 can be rotated relative to the housing 2 when a handle 8 is in a first axial position 9 as shown in fig. 2, 4 and 6. If the handle however is placed in a second axial position 10 the handle 8 as well as the valve top 14 and the insert 3 cannot be rotated to reverse the flow direction. The second axial position 10 of the handle 8 is shown in fig. 1, 3 and 5.

The handle 8 comprises fingers 12, that protrude in a radial direction and engage in the housing 2, when the handle 8 is in the second axial position 10 as seen for example in fig. 1. The fingers 12 in this case engage into cut-outs 11 of the housing 2 whereby a rotation of the handle 8 as well as of the valve top or the insert 3 is blocked. The fingers 12 to this end not only abut the housing 2 in a rotational direction in the second axial position 10 but also abut the valve top 14 in a tangential direction. The fingers 12 to this end have a larger axial extension than the cut-outs 11.

In the first axial position 9 as seen is fig. 2, 4 and 6 the handle 8, and preferably the fingers 12, engage into recesses 13 of the valve top 14.

Referring to fig. 2 to 6, the valve 1 also comprises a presetting element 15 which is in this embodiment partially embedded in the valve top 14 as well as in the insert 3. Coaxially with the presetting element 15 a spindle 21 is arranged. The valve element 5 is connected to one axial and to the spindle 21. In this embodiment the presetting element 15 comprises a presetting handle 22. Preferably, the presetting handle 22 has the shape of a ring.

In this embodiment the presetting of the valve 1 can be changed by rotating the presetting handle 22 when the handle 8 is in the second axial position. In the second axial position 10 of the handle 8 a rotation of the valve top 14 as well as the insert 3 relative to the housing 2 is blocked. Consequently, if one applies a torque to the presetting handle 22 the presetting element 15 will be rotated to change the presetting. By a change of presetting in the context of this application a change in the maximum fluid flow through the valve is denoted. This may be achieved by changing the effective flow cross-section from one of the fluid ports 6, 7 through an orifice to the valve seat 4 as in the given embodiment. Alternatively, the maximum distance between the valve element 5 and the valve seat 4 may be adjusted. The larger the maximum distance between the valve element 5 and the valve seat 4 is chosen, the higher is the maximum flow through the valve 1.

In an alternative embodiment the presetting may be adjusted by axially displacing the presetting element relative to the insert.

In fig. 7 and 8 the handle 8 is shown separated from the valve 1. In this case one may more clearly identify the cut-outs 11 in the housing 2. Furthermore, one can see one of the recesses 13 into which the fingers 12 of the handle 8 can engage in the first axial position 9. Moreover, in fig. 8 one can see that the handle 8 comprises a flow indicator 18 for indicating the flow direction in the shape of an arrow. The flow indicator 18 preferably is arranged on an axial face of the fingers 12 but it can also be arranged on a radial outside of the handle 8. One can also see in fig. 8 that the handle 8 here has the shape of a ring handle with fingers 12 protruding radially inwards. However, the handle 8 can also have a different geometry.

In this embodiment the housing 2 comprises two cut-outs 11 which are arranged on opposite sides of the housing, i.e. in a 180° angular distance. Similarly the handle 8 comprises two fingers 12 which are also arranged in a 180° angular distance from one another. This ensures that the handle 8 can only be locked into a first axial position in two possible rotational positions. Consequently, it is not possible to leave the valve in an intermediate position where the insert 3 is not fully rotated from one flow direction to the other. Thus the problem of previous reversible valves which could in some cases be left in intermediate rotational position of the insert has been solved with the valve according to the present invention.

The valve 1 has the further advantage that a chosen presetting of the valve 1 is saved when the flow direction through the valve 1 is reversed. This is achieved by the presetting element 15, the valve top 14 as well as the insert 3 all being rotated together with the handle 8 when the flow direction is being reversed. Consequently a chosen rotational position of the presetting element 15 relative to the valve top 14 is not changed when the flow direction is reversed.

In fig. 7 one can furthermore see that the valve 1 comprises a presetting indicator 19. Here the presetting indicator 19 is arranged on the valve top 14 in close vicinity to the presetting element 15. The presetting element 15 can for example comprise numbers or other measures of the presetting which can be compared relative to the presetting indicator 19.

When the handle 8 is in the first axial position 9 it is not possible to attach a valve attachment to the valve. A valve attachment is, for example, an attached actuator like a thermostatic actuator. This has the advantage that the person installing the valve attachment will not be able to install the valve attachment as long as the handle and the insert have been rotated into one of the two rotational positions in which the handle can be placed in the second axial position 10. This can, for example, be facilitated by a connection geometry for the valve attachment being blocked by the handle 8 when the handle 8 is in the first axial position 9.

## Claims

1. A valve (1) comprising a valve housing (2), an insert (3), a valve seat (4), a valve element (5), a first fluid port (6) and a second fluid port (7), wherein the insert (3) can be rotated to reverse the flow direction from the first fluid port (6) through the valve seat (4) to the second fluid port (7), wherein the valve (1) comprises a handle (8), **characterized in that** in a first axial position (9) the handle can be rotated with the insert (3) to reverse the flow through the valve (1), and in a second axial position (10) blocks a rotation of the insert (3), wherein the handle (8) can only be displaced into a second axial position (10) when the insert (3) is in one of the intended rotational positions and not in an intermediate position.

2. The valve (1) according to claim 1, **characterized in that** the housing (2) comprises at least two cut-outs (11) in a circumferential direction, which the handle (8) engages in, when the handle (8) is in the second axial position (10).

3. The valve (1) according to claim 1 or 2, **characterized in that** the handle (8) comprises at least one finger (12), that protrudes in a radial direction and that engages in the housing (2), when the handle (8) is in the second axial position (10).

4. The valve (1) according to any of claims 1 to 3, **characterized in that** the insert (3) is connected to at least one recess (13), which the handle (8) engages in, when the handle (8) is in the first axial position (9) such that rotating the handle (8) also rotates the insert (3).

5. The valve (1) according to any of claims 1 to 4, **characterized in that** the valve (1) comprises a valve top (14), wherein the valve top (14) is rotationally fixed to the insert (3).

6. The valve (1) according to any of claims 1 to 5, **characterized in that** the valve (1) comprises a presetting element (15), that can be rotated relative to the insert (3) to adjust the maximum flow through the valve (1).

7. The valve (1) according claim 6, **characterized in that** the valve top (14) is rotatably connected to the housing (2) and holds the presetting element (15) in the housing (2).

8. The valve (1) according to any of claims 1 to 7, **characterized in that** the handle (8) blocks the connection of a valve attachment to the valve (1) when the handle (8) is not in the second axial position (10).

9. The valve (1) according to any of claims 6 to 8, **characterized in that** the insert (3), the valve top (14) and the presetting element (15) are all rotated with the handle (8) when the flow direction is reversed.

10. The valve (1) according to any of claims 6 to 9, **characterized in that** the presetting of the presetting element (15) is not changed when the handle (8) is rotated with the insert (3).

11. The valve (1) according to any of claims 1 to 10, **characterized in that** the handle (8) is a ring handle.

12. The valve (1) according to any of claims 5 to 11, **characterized in that** the axial movement of the handle (8) is limited by the housing (2) on one end and by the valve top (14) on the other end.

13. The valve (1) according to any of claims 1 to 12, **characterized in that** the handle (8) can only be displaced into the second axial position (10) in two discrete rotational positions that correspond to one of the flow directions through the valve (1) each.

14. The valve (1) according to any of claims 1 to 13, **characterized in that** the handle (8) comprises at least one flow indicator (18) to indicate the chosen flow direction through the valve (1).

15. The valve (1) according to claim 14, **characterized in that** the flow indicator (18) is arranged such that it is visible to an outside even if a valve attachment is connected to the valve (1).

## Patentansprüche

1. Ventil (1), umfassend ein Ventilgehäuse (2), einen Einsatz (3), einen Ventilsitz (4), ein Ventilelement (5), einen ersten Fluidanschluss (6) und einen zweiten Fluidanschluss (7), wobei der Einsatz (3) gedreht werden kann, um die Strömungsrichtung von dem ersten Fluidanschluss (6) durch den Ventilsitz (4) zu dem zweiten Fluidanschluss (7) umzukehren, wobei das Ventil (1) einen Griff (8) umfasst, **dadurch gekennzeichnet, dass** der Griff in einer ersten Axialposition (9) mit dem Einsatz (3) gedreht werden kann, um die Strömung durch das Ventil (1) umzukehren, und in einer zweiten Axialposition (10) eine Drehung des Einsatzes (3) blockiert, wobei der Griff (8) nur dann in eine zweite Axialposition (10) verschoben werden kann, wenn sich der Einsatz (3) in einer der vorgesehenen Drehpositionen und nicht in einer Zwischenposition befindet.

2. Ventil (1) nach Anspruch 1, **dadurch gekennzeichnet, dass** das Gehäuse (2) mindestens zwei Ausschnitte (11) in einer Umfangsrichtung umfasst, in die der Griff (8) eingreift, wenn sich der Griff (8) in der zweiten Axialposition (10) befindet.

3. Ventil (1) nach Anspruch 1 oder 2, **dadurch gekennzeichnet, dass** der Griff (8) mindestens einen Finger (12) umfasst, der in eine Radialrichtung ragt und der das Gehäuse (2) in Eingriff nimmt, wenn sich der Griff (8) in der zweiten Axialposition (10) befindet.

4. Ventil (1) nach einem der Ansprüche 1 bis 3, **dadurch gekennzeichnet, dass** der Einsatz (3) mit mindestens einer Aussparung (13) verbunden ist, in die der Griff (8) eingreift, wenn sich der Griff (8) in der ersten Axialposition (9) befindet, so dass durch Drehen des Griffs (8) auch der Einsatz (3) gedreht wird.

5. Ventil (1) nach einem der Ansprüche 1 bis 4, **dadurch gekennzeichnet, dass** das Ventil (1) ein Ventiloberteil (14) umfasst, wobei das Ventiloberteil (14) mit dem Einsatz (3) drehfest verbunden ist.

6. Ventil (1) nach einem der Ansprüche 1 bis 5, **dadurch gekennzeichnet, dass** das Ventil (1) ein Voreinstellungselement (15) umfasst, das bezüglich des Einsatzes (3) gedreht werden kann, um die Maximalströmung durch das Ventil (1) einzustellen.

7. Ventil (1) nach Anspruch 6, **dadurch gekennzeichnet, dass** das Ventiloberteil (14) mit dem Gehäuse (2) drehbar verbunden ist und das Voreinstellungselement (15) in dem Gehäuse (2) hält.

8. Ventil (1) nach einem der Ansprüche 1 bis 7, **dadurch gekennzeichnet, dass** der Griff (8) die Verbindung eines Ventilaufsatzes mit dem Ventil (1) blockiert, wenn sich der Griff (8) nicht in der zweiten Axialposition (10) befindet.

9. Ventil (1) nach einem der Ansprüche 6 bis 8, **dadurch gekennzeichnet, dass** der Einsatz (3), das Ventiloberteil (14) und das Voreinstellungselement (15) alle mit dem Griff (8) gedreht werden, wenn die Strömungsrichtung umgedreht wird.

10. Ventil (1) nach einem der Ansprüche 6 bis 9, **dadurch gekennzeichnet, dass** die Voreinstellung des Voreinstellungselements (15) nicht geändert wird, wenn der Griff (8) mit dem Einsatz (3) gedreht wird.

11. Ventil (1) nach einem der Ansprüche 1 bis 10, **dadurch gekennzeichnet, dass** der Griff (8) ein Ringgriff ist.

12. Ventil (1) nach einem der Ansprüche 5 bis 11, **dadurch gekennzeichnet, dass** die Axialbewegung des Griffs (8) an einem Ende durch das Gehäuse (2) und am anderen Ende durch das Ventiloberteil (14) begrenzt wird.

13. Ventil (1) nach einem der Ansprüche 1 bis 12, **dadurch gekennzeichnet, dass** der Griff (8) nur in zwei diskreten Drehpositionen, die jeweils einer der Strömungsrichtungen durch das Ventil (1) entsprechen, in die zweite Axialposition (10) verschoben werden kann.

14. Ventil (1) nach einem der Ansprüche 1 bis 13, **dadurch gekennzeichnet, dass** der Griff (8) mindestens einen Strömungsanzeiger (18) zum Anzeigen der gewählten Strömungsrichtung durch das Ventil (1) umfasst.

15. Ventil (1) nach Anspruch 14, **dadurch gekennzeichnet, dass** der Strömungsanzeiger (18) so angeordnet ist, dass er nach außen hin sichtbar ist, wenn ein Ventilaufsatz mit dem Ventil (1) verbunden ist.

## Revendications

1. Vanne (1) comprenant un boîtier de vanne (2), un insert (3), un siège de vanne (4), un élément de vanne (5), un premier orifice de fluide (6) et un second orifice de fluide (7), l'insert (3) pouvant être tourné pour inverser la direction d'écoulement du premier orifice de fluide (6) à travers le siège de vanne (4) au second orifice de fluide (7), la vanne (1) comprenant une poignée (8), **caractérisée en ce que** dans une première position axiale (9), la poignée peut être tournée avec l'insert (3) pour inverser l'écoulement à travers la vanne (1), et dans une deuxième position axiale (10) bloque une rotation de l'insert (3), la poignée (8) ne pouvant être déplacée dans une deuxième position axiale (10) que lorsque l'insert (3) est dans une des positions de rotation prévues et non dans une position intermédiaire.

2. Vanne (1) selon la revendication 1, **caractérisée en ce que** le boîtier (2) comprend au moins deux découpes (11) dans une direction circonférentielle dans lesquelles s'engage la poignée (8), lorsque la poignée (8) est dans la deuxième position axiale (10).

3. Vanne (1) selon la revendication 1 ou 2, **caractérisée en ce que** la poignée (8) comprend au moins un doigt (12) qui dépasse dans le sens radial et qui s'engage dans le boîtier (2) lorsque la poignée (8) est dans la deuxième position axiale (10).

4. Vanne (1) selon l'une quelconque des revendications 1 à 3, **caractérisée en ce que** l'insert (3) est raccordé à au moins un évidement (13) dans lequel s'engage la poignée (8) lorsque la poignée (8) est dans la première position axiale (9), de sorte que la rotation de la poignée (8) fait également tourner l'insert (3).

5. Vanne (1) selon l'une quelconque des revendications 1 à 4, **caractérisée en ce que** la vanne (1) comprend une partie supérieure de vanne (14), la partie supérieure de vanne (14) étant fixée en rotation sur l'insert (3).

6. Vanne (1) selon l'une quelconque des revendications 1 à 5, **caractérisée en ce que** la vanne (1) comprend un élément de préréglage (15) qui peut être tourné par rapport à l'insert (3) pour régler l'écoulement maximal à travers la vanne (1).

7. Vanne (1) selon la revendication 6, **caractérisée en ce que** la partie supérieure de vanne (14) est raccordée en rotation au boîtier (2) et maintient l'élément de préréglage (15) dans le boîtier (2).

8. Vanne (1) selon l'une quelconque des revendications 1 à 7, **caractérisée en ce que** la poignée (8) bloque le raccordement d'une fixation de vanne à la vanne (1) lorsque la poignée (8) n'est pas dans la deuxième position axiale (10).

9. Vanne (1) selon l'une quelconque des revendications 6 à 8, **caractérisée en ce que** l'insert (3), la partie supérieure de vanne (14) et l'élément de préréglage (15) sont tous tournés avec la poignée (8) lorsque la direction d'écoulement est inversée.

10. Vanne (1) selon l'une quelconque des revendications 6 à 9, **caractérisée en ce que** le préréglage de l'élément de préréglage (15) n'est pas modifié lorsque la poignée (8) est tournée avec l'insert (3).

11. Vanne (1) selon l'une quelconque des revendications 1 à 10, **caractérisée en ce que** la poignée (8) est une poignée annulaire.

12. Vanne (1) selon l'une quelconque des revendications 5 à 11, **caractérisée en ce que** le mouvement axial de la poignée (8) est limité par le boîtier (2) à une extrémité et par la partie supérieure de vanne (14) à l'autre extrémité.

13. Vanne (1) selon l'une quelconque des revendications 1 à 12, **caractérisée en ce que** la poignée (8) ne peut être déplacée dans la deuxième position axiale (10) que dans deux positions de rotation discrètes qui correspondent chacune à l'une des directions d'écoulement à travers la vanne (1).

14. Vanne (1) selon l'une quelconque des revendications 1 à 13, **caractérisée en ce que** la poignée (8) comprend au moins un indicateur d'écoulement (18) pour indiquer la direction d'écoulement choisie à travers la vanne (1).

15. Vanne (1) selon la revendication 14, **caractérisée en ce que** l'indicateur d'écoulement (18) est agencé de telle sorte qu'il soit visible de l'extérieur même si une fixation de vanne est raccordée à la vanne (1).
